# FASCICULE DE BREVET EUROPEEN

(11) **EP 3 921 234 B1**
(45) Date de publication et mention de la délivrance du brevet: **18.05.2022**
(21) Numéro de dépôt: 20706578.0
(22) Date de dépôt: 07.02.2020
(51) Int. Cl.: B64G 1/10, G06Q 10/04, G06Q 10/06, G06T 1/00

(54) **SYSTÈMES INFORMATIQUES POUR L'ACQUISITION D'IMAGES SATELLITAIRES AVEC PRISE EN COMPTE DE L'INCERTITUDE MÉTÉOROLOGIQUE ET DISPOSITIF DE CALCUL DE PLAN MISSION POUR SATELLITE CORRESPONDANT**
RECHNERSYSTEME ZUR AUFNAHME VON SATELLITENBILDERN UNTER BERÜCKSICHTIGUNG METEOROLOGISCHER UNSICHERHEIT UND ENTSPRECHENDE VORRICHTUNG ZUR MISSIONSPLANBERECHNUNG
COMPUTER SYSTEMS FOR ACQUIRING SATELLITE IMAGES WHILE TAKING INTO ACCOUNT METEOROLOGICAL UNCERTAINTY AND CORRESPONDING SATELLITE MISSION PLAN CALCULATOR

(30) Priorité: 08.02.2019 FR 1901294
(43) Date de publication de la demande: 15.12.2021
(73) Titulaire: Airbus Defence and Space SAS, 31402 Toulouse Cedex 4 (FR); Centre National d'Etudes Spatiales (C.N.E.S.), 75001 Paris (FR)
(72) Inventeur: SERIES, Benoît, 31402 Toulouse Cedex 4 (FR); PICARD, Mathieu, 31402 Toulouse Cedex 4 (FR); GUERRA, Jonathan, 31402 Toulouse Cedex 4 (FR)
(74) Mandataire: Plasseraud IP
(86) Numéro de dépôt international: PCT/FR2020/050215
(87) Numéro de publication internationale: WO 2020/161446

(56) Documents cités:
- WO-A1-2019/020499
- CN-A- 106 845 692
- CN-A- 108 256 822
- FR-A1- 3 039 728
- US-A1- 2012 029 812

## Description

L'invention concerne le domaine de la télédétection par satellite. Plus précisément, elle concerne des systèmes informatiques pour l'acquisition d'images satellitaires. Elle concerne aussi des dispositifs de calcul de plan mission pour satellite ainsi que des satellites d'observation de la Terre.

L'espace circumterrestre contient nombre de satellites d'observation de la Terre qui permettent notamment de surveiller des paramètres du système Terre (océans, atmosphères, ressources naturelles, impacts des activités humaines, etc.), obtenir des cartographies ou fournir des informations qui permettent d'assurer la défense des États. Pour cela, ces systèmes se basent sur un ensemble de données d'imagerie satellitaire, c'est-à-dire un ensemble de mesures réalisées à l'aide d'instruments embarqués au niveau des satellites.

Du fait de la banalisation de l'observation de la Terre, les demandes d'imagerie satellitaire se multiplient de jour en jour. Or, certaines des ressources des satellites sont limitées, comme le nombre de prises de vues réalisables durant le survol d'une zone du globe ou encore les capacités de transmission des données vers le sol. On doit donc planifier l'utilisation de ces ressources tout en répondant aux demandes d'imagerie satellitaire.

Dans le domaine de l'observation optique de la Terre, l'imagerie satellitaire dépend des conditions météorologiques. En effet, des nuages présents dans la zone d'acquisition peuvent masquer l'objet ou le territoire que l'on cherche à observer, et il est connu de prendre en compte les conditions météorologiques pour calculer le plan de mission du satellite (voir CN 106845692 A, CN 108256822 A, US 2012/029812 A1). Or, il est bien connu que les prévisions météorologiques présentent beaucoup d'incertitudes, quelle que soit la modélisation des phénomènes météorologiques.

Afin de réduire ces incertitudes, il est connu de réaliser une prévision dite d'ensemble. Ainsi, plutôt que de simuler un seul jeu de données d'entrée avec le modèle, ce qui constitue une prévision déterministe, on calcule plusieurs jeux de données d'entrée déduit des incertitudes que l'on a estimées. On dispose alors d'un ensemble de prévisions que l'on espère représentatif de l'incertitude de la prévision déterministe.

Toutefois, la prévision d'ensemble nécessite beaucoup de temps de calcul.

Un tel caractère ne répond pas aux exigences toujours plus grandes de rapidité et de précision requises par les clients dans des systèmes de télédétection par satellite.

La présente invention vise donc à pallier les inconvénients précités.

Pour cela, un premier aspect de l'invention concerne un système informatique pour l'acquisition d'images satellitaires.

Enfin, un deuxième aspect de l'invention concerne un dispositif de calcul de plan mission pour satellite.

Ainsi, l'invention concerne un système informatique pour l'acquisition d'images satellitaires associées à au moins une zone prédéterminée de la Terre préalablement divisée selon une grille à mailles. Le système comprend :
- au moins un satellite d'observation de la Terre comprenant,
   un système d'imagerie optique pour acquérir au moins une image satellitaire à au moins une date d'acquisition,
   un premier émetteur-récepteur satellite pour recevoir un signal de commande, et
   un premier processeur pour commander le système d'imagerie optique à partir du signal de commande,
- au moins un dispositif de calcul de plan mission pour satellite comprenant,
   un deuxième émetteur-récepteur satellite pour émettre le signal de commande,
   une mémoire pour stocker, pour chaque maille, un historique de valeurs de variables météorologiques qui comprend des observations météorologiques et/ou des prévisions météorologiques qui ont été observées et/ou qui ont été prévues à une date qui précède la date d'acquisition,
   un deuxième processeur pour

   o déterminer, pour chaque maille, à partir de l'historique de valeurs de variables météorologiques, une pluralité de groupes de valeurs qui comprennent chacun, au moins :
      une première valeur de variable météorologique associée à une première date d'historique,
      une deuxième valeur de variable météorologique associée à une deuxième date d'historique postérieure ou antérieure à la première date d'historique, et
      une différence de temps d'historique entre la première date d'historique et la deuxième date d'historique,
   o calculer, pour tout ou partie de la zone prédéterminée de la Terre, à partir de la pluralité de groupes de valeurs, une fonction de probabilité conditionnelle qui décrit la probabilité d'observer une deuxième valeur de variable météorologique comprise dans un intervalle prédéterminé à une deuxième date sous la condition :
      d'observer une première valeur de variable météorologique à une première date qui est antérieure à la deuxième date, et/ou
      de prévoir à la première date une troisième valeur de variable météorologique pour une date de prévision située autour de la deuxième date, à savoir, à une date qui précède, suit et/ou est égale à la deuxième date.
      et sous la condition supplémentaire d'observer une différence de temps prédéterminée entre d'une part la première date et, d'autre part, la deuxième date et/ou la date de prévision,
   o sélectionner une pluralité de mailles de la grille, prévues pour être survolées par le satellite à la date d'acquisition, à partir des caractéristiques orbitales du satellite, de sorte à obtenir des mailles candidates,
   o obtenir, pour chaque maille candidate, au moins une observation météorologique courante associée à une date de planification qui précède la date d'acquisition et/ou au moins une prévision météorologique courante associée à une date située autour de la date d'acquisition,
   ∘ sélectionner tout ou partie des mailles candidates à partir de la fonction de probabilité conditionnelle et de l'au moins une observation météorologique courante et/ou de l'au moins une prévision météorologique courante, mais également à partir de la différence entre la date d'acquisition et une date de réalisation de l'au moins une observation météorologique courante et/ou de l'au moins une prévision météorologique courante, de sorte à obtenir des mailles sélectionnées,
      calculer un plan mission du satellite à partir des mailles sélectionnées, et
   o insérer le plan mission dans le signal de commande.
   L'invention couvre également un dispositif de calcul de plan mission pour satellite. Le dispositif comprend :
- un premier émetteur-récepteur satellite pour émettre un signal de commande qui commande un système d'imagerie optique d'un satellite d'observation de la Terre pour réaliser l'acquisition d'au moins une image satellitaire à au moins une date d'acquisition,
- une mémoire pour stocker un historique de valeurs de variables météorologiques qui comprend des observations météorologiques associées à au moins une zone prédéterminée de la Terre préalablement divisée selon une grille à mailles, les observations météorologiques et/ou des prévisions météorologiques qui ont été observées et/ou qui ont été prévues à une date qui précède la date d'acquisition,
- un deuxième processeur pour
   o déterminer, pour chaque maille, à partir de l'historique de valeurs de variables météorologiques, une pluralité de groupes de valeurs qui comprennent chacun, au moins :
      une première valeur de variable météorologique associée à une première date d'historique,
      une deuxième valeur de variable météorologique associée à une deuxième date d'historique postérieure ou antérieure à la première date d'historique, et
      une différence de temps d'historique entre la première date d'historique et la deuxième date d'historique,
   o calculer, pour tout ou partie de la zone prédéterminée de la Terre, à partir de la pluralité de groupes de valeurs, une fonction de probabilité conditionnelle qui décrit la probabilité d'observer une deuxième valeur de variable météorologique comprise dans un intervalle prédéterminé à une deuxième date sous la condition :
      d'observer une première valeur de variable météorologique à une première date qui est antérieure à la deuxième date, et/ou
      de prévoir à la première date une troisième valeur de variable météorologique pour une date de prévision située autour de la deuxième date, à savoir, à une date qui précède, suit et/ou est égale à la deuxième date.
      et sous la condition supplémentaire d'observer une différence de temps prédéterminée entre d'une part la première date et, d'autre part, la deuxième date et/ou la date de prévision,
   o sélectionner une pluralité de mailles de la grille, prévues pour être survolées par le satellite à la date d'acquisition, à partir des caractéristiques orbitales du satellite, de sorte à obtenir des mailles candidates,
   o obtenir, pour chaque maille candidate, au moins une observation météorologique courante associée à une date de planification qui précède la date d'acquisition et/ou au moins une prévision météorologique courante associée à une date située autour de la date d'acquisition,
   ∘ sélectionner tout ou partie des mailles candidates à partir de la fonction de probabilité conditionnelle et de l'au moins une observation météorologique courante et/ou de l'au moins une prévision météorologique courante, mais également à partir de la différence entre la date d'acquisition et une date de réalisation de l'au moins une observation météorologique courante et/ou de l'au moins une prévision météorologique courante, de sorte à obtenir des mailles sélectionnées,
- calculer un plan mission du satellite à partir des mailles sélectionnées, et
   o insérer le plan mission dans le signal de commande.

Dans une première mise en œuvre, la pluralité de groupes de valeurs comprend, en outre, des valeurs de variables météorologiques qui sont associées à des mailles voisines de la maille courante.

Dans une deuxième mise en œuvre, les mailles sélectionnées sont celles dont la fonction de probabilité conditionnelle sort, pour la date d'acquisition, une probabilité supérieure ou inférieure à une première probabilité prédéterminée.

Dans une troisième mise en œuvre, le deuxième processeur calcule la fonction de probabilité conditionnelle à partir de l'estimation d'une densité de probabilité de tout ou partie des groupes de valeurs.

Dans une quatrième mise en œuvre, le deuxième processeur calcule la fonction de probabilité conditionnelle grâce à un modèle d'apprentissage automatique préentraîné à partir de tout ou partie des groupes de valeurs.

D'autres caractéristiques et avantages de l'invention seront mieux compris à la lecture de la description qui va suivre et en référence aux dessins annexés, donnés à titre illustratif et nullement limitatif.
[Fig. 1]La **figure 1** représente un système informatique selon l'invention.
[Fig. 2]La **figure 2** représente une autre vue du système informatique selon l'invention.
[Fig. 3]La **figure 3** représente une zone prédéterminée de la Terre.
[Fig. 4]La **figure 4** représente une grille à mailles qui couvre la zone prédéterminée de la Terre.

Pour des raisons de clarté, les éléments représentés ne sont pas nécessairement représentés à la même échelle, les uns par rapport aux autres, sauf mention contraire.

Dans le cadre de la description, on entend par système d'observation de la Terre, un système comprenant des constellations satellitaires telles que Landsat, Spot ou encore Pléiades. En outre, on précise que l'invention concerne les systèmes satellitaires optiques, pour lesquels l'acquisition d'images de la Terre dépend d'un éclairement solaire. Ces systèmes utilisent des capteurs passifs qui permettent d'enregistrer le rayonnement solaire réfléchi par le sol, dans diverses longueurs d'onde.

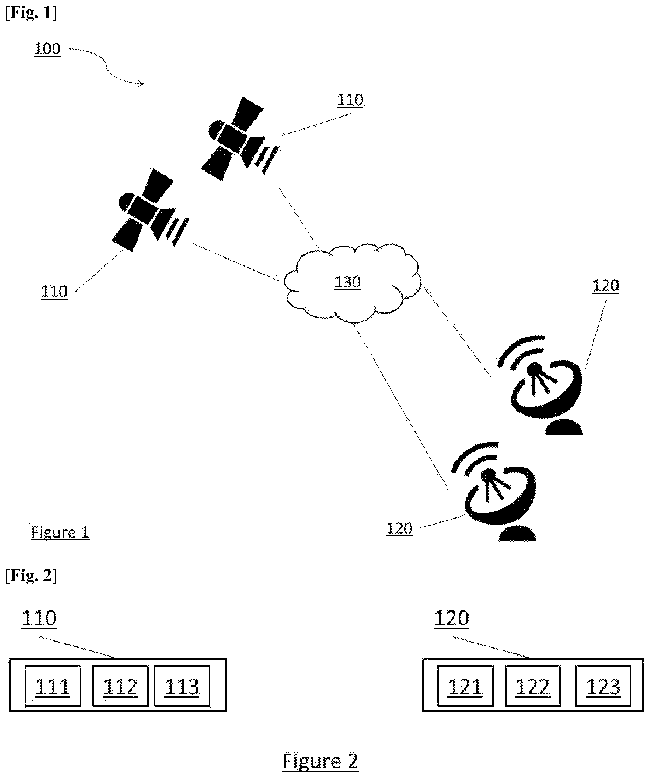

Le principe général de l'invention est basé sur le constat que l'incertitude liée aux conditions météorologiques peut mener à l'élaboration de plans mission, pour satellite, peu performants qui couvrent des zones d'acquisitions présentant une faible probabilité d'obtenir des prises de vues acceptables à la date souhaitée d'acquisition. Ainsi, l'invention propose de caractériser cette incertitude et de l'utiliser pour améliorer l'élaboration des plans mission pour satellite. Dans l'invention, on construit un modèle des incertitudes à partir d'observations et/ou de prévisions météorologiques passées. Du fait que le modèle d'incertitudes est construit à partir d'observations et/ou de prévisions météorologiques passées, il peut être construit préalablement à toute requête d'imagerie satellitaire, de sorte que la quantité de calculs requise pour construire ce modèle d'incertitudes n'impacte pas le calcul du plan de mission. Ensuite, on exploite le modèle d'incertitudes, au moment de la planification, en présentant en entrée du modèle les observations et/ou les prévisions courantes. De cette manière, on peut identifier les zones d'acquisitions pour lesquelles il est plus probable d'obtenir des prises de vues acceptables à la date souhaitée d'acquisition. Ainsi, trois phases principales sont mises en œuvre, à savoir une phase de collecte d'une historique correspondant aux observations et/ou prévisions météorologiques passées, une phase de calcul du modèle d'incertitudes sous la forme d'une fonction de probabilité conditionnelle, et une phase de planification qui utilise le modèle d'incertitudes. Typiquement, la phase de calcul de modèle d'incertitudes est réalisée préalablement à toute requête d'imagerie satellitaire. La **figure 1** illustre selon l'invention, un système informatique 100 pour l'acquisition d'images satellitaires associées à au moins une zone prédéterminée de la Terre.

Dans l'exemple de la **figure 1****,** on considère que le système informatique 100 reçoit une requête en imagerie satellitaire similaire aux requêtes reçues et traitées dans les centres mission pour satellite. Toutefois, on envisage également que le système informatique 100 reçoive plusieurs requêtes concurrentes.

Dans l'invention, la requête définit au moins une zone prédéterminée de la Terre dans laquelle l'acquisition en imagerie satellitaire doit être réalisée. Dans un exemple, on définit la zone prédéterminée de la Terre par un ou plusieurs polygones dont les sommets correspondent à des positions géographiques du globe terrestre. Dans une mise en œuvre particulière, la requête est prévue pour être associée à au moins un système d'observation de la Terre prédéterminé qui est configuré pour survoler la zone prédéterminée de la Terre.

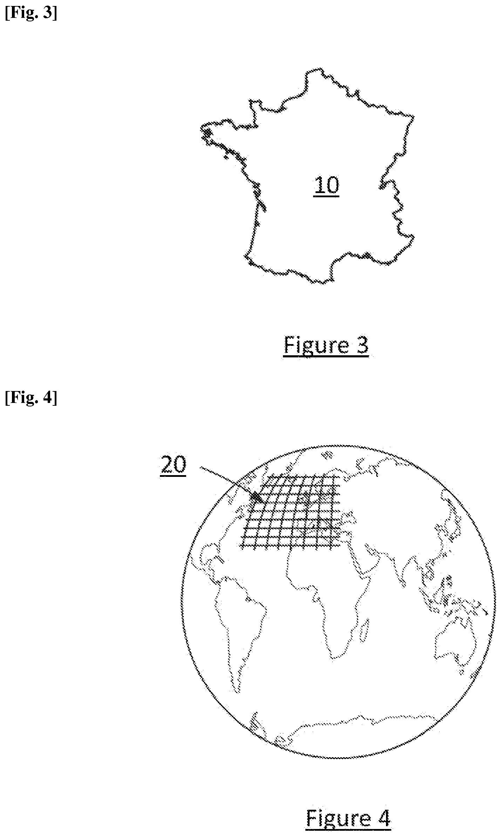

La **figure 3** illustre un exemple de zone prédéterminée de la Terre 10.

Dans l'invention, la zone prédéterminée de la Terre 10 est divisée selon une grille composée de mailles. On entend par grille, par exemple, un quadrillage horizontal et vertical. On entend par maille, l'un quelconque des quadrilatères élémentaires qui composent la grille. Par exemple, chaque maille de la grille présente une forme carrée ou voisine d'un carré, par exemple, une forme rectangulaire. La **figure 4** illustre un exemple de grille à mailles 20 superposée à la zone prédéterminée de la Terre 10. Dans un premier exemple, la grille selon l'invention se présente sous la forme d'un fichier image dans lequel chaque maille associée à la zone prédéterminée est géoréférencée. Dans un deuxième exemple, la grille selon l'invention se présente sous la forme d'un fichier texte dans lequel chaque ligne décrit au moins une maille de la grille avec des informations de géoréférencement associées à la zone prédéterminée.

De retour à la **figure 1****,** le système informatique 100 comprend au moins un satellite d'observation de la Terre 110 et au moins un dispositif de calcul de plan mission pour satellite 120. En outre, le système informatique 100 est agencé selon une architecture qui repose sur un réseau de communication satellitaire 130 de type connu.

Dans l'exemple de la **figure 2****,** le satellite d'observation de la Terre 110 comprend un système d'imagerie optique 111, un premier émetteur-récepteur satellite 112 et un premier processeur 113.

Le système d'imagerie optique 111 est prévu pour acquérir au moins une image satellitaire. Dans un exemple, le système d'imagerie optique 111 comprend au moins un instrument optique qui fonctionne selon un mode du type choisi parmi (en anglais) : « push-broom », « push-frame », « step-and-stare ».

Dans l'invention, le système d'imagerie optique 111 est prévu pour acquérir l'image satellitaire à au moins une date d'acquisition. On entend par date, l'indication de l'heure, du jour, du mois et de l'année.

Dans un exemple, on peut considérer que la date d'acquisition est prévue pour le «dd/MM/YYYY HH:mm » où dd correspond au jour, MM correspond au mois, YYYY correspond à l'année concernée, HH correspond à l'heure et mm correspond aux minutes. Dans un autre exemple, on peut considérer que l'acquisition satellitaire est réalisée sur plusieurs jours aux dates suivantes «dd/MM/YYYY HH:mm », « (dd+2)/MM/YYYY (HH+1):mm », « (dd+5)/MM/YYYY HH:(mm+15) » et « (dd+6/MM/YYYY (HH+2):(mm-3) ». Dans l'exemple précédent, la date « (dd+2)/MM/YYYY (HH+1):mm » succède à la date « dd/MM/YYYY HH:mm » de deux jours plus une heure. La date « (dd+5)/MM/YYYY HH:(mm+15) » succède à la date « dd/MM/YYYY HH:mm » de cinq jours moins quinze minutes. Et la date « (dd+6/MM/YYYY (HH+2):(mm-3) » succède à la date « dd/MM/YYYY HH:mm » de six jours plus deux heures et moins trois minutes. Bien sûr, on peut envisager d'autres intervalles de temps d'acquisition plus court ou plus long selon les besoins du client.

Le premier émetteur-récepteur satellite 112 est prévu pour recevoir un signal de commande. Dans un exemple, le signal de commande est un signal radio satellitaire qui utilise un protocole de communication satellitaire de type connu.

Le premier processeur 113 est prévu pour commander le système d'imagerie optique à partir du signal de commande.

Dans l'exemple de la **figure 2****,** le dispositif de calcul de plan mission pour satellite 120 comprend un deuxième émetteur-récepteur satellite 121, une mémoire 122 et un deuxième processeur 123.

Le deuxième émetteur-récepteur satellite 121 est prévu pour émettre le signal de commande.

La mémoire 122 est prévue pour stocker, pour chaque maille de la grille 20, un historique de valeurs de variables météorologiques qui comprend des observations météorologiques et/ou des prévisions météorologiques passées que l'on a observées et/ou prévues à une date qui précède une date de planification qui précède la date d'acquisition. Dans un exemple, la date de planification correspond au moment de la planification, c'est-à-dire à une date de commencement de planification d'une mission d'acquisition. En pratique, cette date correspond à la date à laquelle le centre mission pour satellite reçoit ou prend en charge la requête d'imagerie satellitaire formulée par les clients. Ainsi, l'historique stocké comporte des observations météorologiques et/ou des prévisions météorologiques passées que l'on a observées avant même de recevoir ou de prendre en charge la requête d'imagerie satellitaire formulée par les clients.

Dans l'invention, les valeurs stockées dans la mémoire 122 sont associées à des variables météorologiques connues telles que la nébulosité, la température, le niveau de précipitation, les caractéristiques du vent, l'humidité relative ou le niveau d'ensoleillement. Dans un exemple, l'historique de valeurs de variables météorologiques peut être contenu dans un fichier de données ERA-Interim produit par le CEPMMT (Centre Européen pour les Prévisions Métérologiques à Moyen Terme, ou ECMWF en anglais pour European Centre for Medium-Range Weather Forecasts). Un tel fichier, selon l'invention, peut comprendre au moins une valeur de variable météorologique pour chacune des mailles de la grille 20, et ce, sur une ou plusieurs dates d'historique au sein d'une ou plusieurs années antérieures à la date d'acquisition.

Le deuxième processeur 123 est prévu pour traiter l'historique de valeurs de variables météorologiques pour former le signal de commande.

Tout d'abord, le deuxième processeur 123 est prévu pour calculer pour chaque maille de la grille 20, à partir de l'historique de valeurs de variables météorologiques, une pluralité de groupes de valeurs qui comprennent chacun, au moins :
- une première valeur de variable météorologique associée à une première date d'historique,
- une deuxième valeur de variable météorologique associée à une deuxième date d'historique postérieure ou antérieure à la première date d'historique, et
- une différence de temps d'historique entre la première date d'historique et la deuxième date d'historique.

Ainsi, pour chaque maille de la grille 20, le deuxième processeur 123 calcule au moins un triplet de valeurs. En pratique, le deuxième processeur 123 identifie au moins une première valeur de variable météorologique associée à une première date d'historique. Ensuite, le deuxième processeur 123 identifie au moins une deuxième valeur de variable météorologique associée à une deuxième date d'historique qui est postérieure ou antérieure à la première date d'historique. Puis, le deuxième processeur 123 calcule la différence de temps entre la première date d'historique et la deuxième date d'historique. Par la suite, le deuxième processeur 123 associe les première et deuxième valeurs météorologiques avec la différence de temps au sein d'un groupe de valeurs. Enfin, le deuxième processeur 123 sauvegarde le groupe de valeurs dans la mémoire 122. Prenons un exemple pour illustrer cet aspect de l'invention. Dans cet exemple, on suppose que l'une des mailles de la grille 20 est associée à un historique de valeurs de nébulosité exprimé en pourcentage de ciel clair. De manière classique, on entend par nébulosité la part de ciel couvert par tout ou partie des nuages au niveau de ladite maille de la grille 20. Comme indiqué plus haut, on peut obtenir les valeurs de nébulosités par observation et/ou par prévision. Dans cet exemple, la maille en question de la grille 20 comprend les valeurs de nébulosité suivantes : 100 % (date_1), 97 % (date_2), 99 % (date_3), 80 % (date_4), 77 % (date_5), 79 % (date_6), pour lesquelles les dates date_1, date_2, date_3, date_4, date_5 et date_6 peuvent être exprimées sous la même forme que celle de la date d'acquisition, comme décrit plus haut. De retour à l'exemple, le deuxième processeur 123 peut déterminer les groupes de valeurs suivants en considérant date_1 comme la première date d'historique: {100 %, 97 %, date_2-date_1}, {100 %, 99 %, date_3-date_1}, {100 %, 80 %, date_4-date_1}, {100 %, 77 %, date_5-date_1} et {100 %, 79 %, date_6-date_1}. Lorsque l'on considère date_3 comme la première date d'historique, le deuxième processeur 123 peut déterminer les groupes de valeurs suivants: {99 %, 80 %, date_4-date_3}, {99 %, 77 %, date_5-date_3} et {99 %, 79 %, date_6-date_3}.

Toutefois, le deuxième processeur 123 est également configuré pour calculer des groupes de valeurs qui comprennent plus de trois valeurs. Dans ce cas, le groupe de valeurs associé à une maille courante de la grille 20 peut comprendre, en outre, des valeurs de variables météorologiques qui sont associées à des mailles voisines de la maille courante de la grille 20. On entend par maille voisine, une maille de la grille 20 qui est située sur la même ligne, la même colonne et/ou autour de la maille courante. Comme indiqué plus haut, on peut obtenir les valeurs de variables météorologiques associées aux mailles voisines par observation et/ou par prévision.

De retour à la **figure 2****,** le deuxième processeur 123 est prévu pour calculer une fonction de probabilité conditionnelle spécifique à tout ou partie de la zone prédéterminée de la Terre 10, à partir de la pluralité de groupes de valeurs. La fonction de probabilité conditionnelle selon l'invention permet de relier des observations météorologiques et/ou des provisions météorologiques, observées et/ou réalisées à des dates différentes, et ce, en fonction d'une différence de temps entre les dates d'observation et/ou les dates de prévision.

Dans l'invention, la fonction de probabilité conditionnelle décrit la probabilité d'observer une deuxième valeur de variable météorologique comprise dans un intervalle prédéterminé à une deuxième date sous la condition :
- d'observer une première valeur de variable météorologique à une première date qui est antérieure à la deuxième date, et/ou
- de prévoir à la première date, antérieure à la deuxième date, une troisième valeur de variable météorologique pour une date de prévision située autour de la deuxième date, à savoir, à une date qui précède, suit et/ou est égale à la deuxième date. En outre, le deuxième processeur 123 calcule la fonction de probabilité conditionnelle sous la condition supplémentaire d'observer une différence de temps prédéterminée entre :
- la première date et la deuxième date, et/ou
- la première date et la date de prévision.

Dans un exemple, la fonction de probabilité conditionnelle selon l'invention permet de répondre aux questions du type :
- quelle est la probabilité d'observer dans une maille de la grille 20, une valeur de nébulosité supérieure à 82 % dans trois heures, sachant que j'y observe maintenant la valeur 77 % ? Dans ce cas, l'intervalle prédéterminé peut être compris entre 82% et 100%.
- quelle est la probabilité d'observer dans une maille de la grille 20, une valeur de nébulosité supérieure à 70 % et inférieure à 80% dans cinq heures, sachant qu'une prévision réalisée il y a deux heures y prévoyait la valeur 10 % ? Dans ce cas, l'intervalle prédéterminé peut être compris entre 70% et 80%.
- quelle est la probabilité d'observer dans une maille de la grille 20, une valeur de nébulosité supérieure à 60 % dans quatre heures, sachant qu'une prévision réalisée pour dans quatre heures y prévoit la valeur 35 % ? Dans ce cas, l'intervalle prédéterminé peut être compris entre 60% et 100%.
- quelle est la probabilité d'observer dans une maille de la grille 20, une valeur de nébulosité inférieure à 20 % dans deux heures, sachant que j'y observe maintenant la valeur 30 % et qu'une prévision réalisée pour dans deux heures y prévoit la valeur 10 % ? Dans ce cas, l'intervalle prédéterminé peut être compris entre 0% et 20%.

Dans une mise en œuvre particulière, dans laquelle les groupes de valeurs comprennent plus de trois valeurs, la fonction de probabilité conditionnelle décrit la probabilité d'observer une deuxième valeur de variable météorologique comprise dans un intervalle prédéterminé à une deuxième date sous la condition supplémentaire :
- d'observer au moins une quatrième valeur de variable météorologique dans une maille voisine de la maille courante, à une quatrième date qui est antérieure à la deuxième date, et/ou
- de prévoir à la quatrième date au moins une cinquième valeur de variable météorologique dans la maille voisine de la maille courante, pour une date de prévision située autour de la deuxième date, à savoir, à une date qui précède, suit et/ou est égale à la deuxième date.

Dans un exemple de cette mise en œuvre particulière, la fonction de probabilité conditionnelle selon l'invention permet de répondre aux questions du type :
- quelle est la probabilité d'observer dans une maille de la grille 20, une valeur de nébulosité supérieure à 82 % dans trois heures, sachant que j'y observe maintenant la valeur 77 % et que j'observe maintenant la valeur 52 % dans une maille voisine ? Dans ce cas, l'intervalle prédéterminé peut être compris entre 82% et 100%.
- quelle est la probabilité d'observer dans une maille de la grille 20, une valeur de nébulosité supérieure à 70 % et inférieure à 85% dans cinq heures, sachant qu'une prévision réalisée il y a deux heures y prévoyait la valeur 10 % et qu'une prévision réalisée il y a deux heures prévoyait la valeur 10 % dans une maille voisine? Dans ce cas, l'intervalle prédéterminé peut être compris entre 70% et 85%.
- quelle est la probabilité d'observer dans une maille de la grille 20, une valeur de nébulosité supérieure à 60 % dans quatre heures, sachant qu'une prévision réalisée pour dans quatre heures y prévoit la valeur 35 % et qu'une prévision réalisée pour dans quatre heures y prévoit la valeur 35 % dans une maille voisine ? Dans ce cas, l'intervalle prédéterminé peut être compris entre 60% et 100%.
- quelle est la probabilité d'observer dans une maille de la grille 20, une valeur de nébulosité inférieure à 20 % dans deux heures, sachant que j'y observe maintenant la valeur 30 % et qu'une prévision réalisée pour dans deux heures y prévoit la valeur 10 % et que j'observe maintenant la valeur 27 % dans une maille voisine ? Dans ce cas, l'intervalle prédéterminé peut être compris entre 0% et 20%.
- quelle est la probabilité d'observer dans une maille de la grille 20, une valeur de nébulosité inférieure à 20 % et supérieure à 10 % dans deux heures, sachant que j'y observe maintenant la valeur 30 % et qu'une prévision réalisée pour dans deux heures y prévoit la valeur 10 % et qu'une prévision réalisée pour dans deux heures prévoit la valeur 15 % dans une maille voisine? Dans ce cas, l'intervalle prédéterminé peut être compris entre 10% et 20%.

Dans un exemple de l'invention, le deuxième processeur 123 calcule la fonction de probabilité conditionnelle à partir de l'estimation d'une densité de probabilité de tout ou partie des groupes de valeurs. On entend par densité de probabilité, une fonction qui pondère mathématiquement l'éventail des valeurs possibles que peut prendre un paramètre. Dans cet exemple, le deuxième processeur 123 estime la densité de probabilité en utilisant des techniques connues, telles que l'estimation par les histogrammes, estimation par les histogrammes mobiles ou l'estimation à noyau (par ex., la méthode de Parzen-Rosenblatt).

Dans un autre exemple de l'invention, le deuxième processeur 123 calcule la fonction de probabilité conditionnelle grâce à un modèle d'apprentissage automatique préentraîné à partir de tout ou partie des groupes de valeurs. Dans cet exemple, on entraîne un modèle d'apprentissage automatique à partir d'un algorithme de classification supervisée. Ainsi entraîné, le modèle d'apprentissage automatique préentraîné pourra prédire, pour chaque maille de la grille 20, une classe représentative d'une valeur de probabilité conditionnelle associée à la deuxième valeur de variable météorologique à la deuxième date en fonction, au moins :
- de l'observation météorologique effectuée à la première date et/ou de la prévision effectuée autour de la deuxième date, et
- de la différence de temps entre la première date et la deuxième date et/ou la différence de temps entre la première date et la date de prévision.

Dans ce cas, la phase d'entraînement nécessite de former une pluralité de vecteurs qui comprennent chacun un groupe de valeurs tel que décrit plus haut. Ensuite, on calcule, pour chaque groupe de valeur, la valeur de probabilité conditionnelle, tel que décrit plus haut. Dans un exemple, la probabilité conditionnelle est calculée à partir d'une densité de probabilité de tout ou partie des groupes de valeurs, comme décrit plus haut. Puis, on définit une classe indicative de la valeur de probabilité conditionnelle calculée. Enfin, on entraîne le modèle d'apprentissage automatique en présentant respectivement les vecteurs et les classes associées, à l'entrée et à la sortie du modèle d'apprentissage automatique, de sorte à obtenir un modèle d'apprentissage automatique préentraîné. Dans une mise en œuvre particulière, on constitue le modèle d'apprentissage automatique à partir d'un réseau de neurones artificiels de type perceptron multicouche ou un réseau de neurones de type convolutif.

De retour à la **figure 2****,** le deuxième processeur 123 sélectionne une pluralité de mailles de la grille 20, que le satellite 110 prévoit de survoler à la date d'acquisition, à partir des caractéristiques orbitales du satellite à la date d'acquisition, de sorte à obtenir des mailles candidates.

On entend par caractéristiques orbitales d'un satellite, les caractéristiques conventionnelles telles que l'altitude, le nombre de révolutions par jour ou l'inclinaison de l'orbite. On peut également définir d'autres paramètres du système conjointement aux caractéristiques orbitales d'un satellite, comme la liste des stations sols permettant la redescente des images réalisées par le satellite, la résolution du système d'imagerie, les bandes spectrales supportées par le système d'imagerie du satellite, la fauchée de l'instrument optique ou encore les limites d'angle de dépointage autorisées pour la prise de vues.

Puis, le deuxième processeur 123 obtient, pour chaque maille candidate, au moins une observation météorologique courante associée à la date de planification qui précède la date d'acquisition et/ou au moins une prévision météorologique courante associée à une date de prévision située autour de la date d'acquisition, à savoir, qui précède, suit ou est égale à la date d'acquisition. Dans l'invention, on obtient l'observation météorologique courante et/ou la prévision météorologique courante à partir des méthodes connues. Par « courante », on entend que l'observation météorologique et/ou la prévision météorologique correspondante a été réalisée à une date qui est égale ou antérieure à la date de planification. En pratique, il s'agit de préférence de l'observation météorologique et/ou de la prévision météorologique la plus récente disponible à la date de planification.

Dans une mise en œuvre particulière, comme indiqué plus haut, le deuxième processeur 123 est également prévu pour obtenir, pour chaque maille voisine de la maille candidate courante, des observations et/ou les prévisions courantes.

Par la suite, le deuxième processeur 123 est prévu pour calculer un plan mission du satellite 110 à partir des mailles candidates et de la fonction de probabilité conditionnelle.

On entend par plan mission (en anglais, mission plan), le plan de programmation du satellite considéré que l'on télécharge/envoie au satellite via le centre de contrôle et qui permet d'effectuer les prises de vue de la zone prédéterminée de la Terre 10 suivant un ordre et des caractéristiques de prise de vue fournies dans le plan. Il est connu que le plan mission prend en compte des contraintes cinématiques liées à la plateforme et intègre également les plans de vidages sur les différentes stations de réception. On peut obtenir un tel plan mission par un générateur de plan mission de type connu, par exemple, comme décrit dans la demande FR3039728.

Enfin, de retour à la **figure 2****,** le deuxième processeur 123 est prévu pour insérer le plan mission dans le signal de commande.

Selon la présente invention, pendant le calcul du plan mission du satellite, le deuxième processeur 123 est en outre prévu pour sélectionner tout ou partie des mailles candidates à partir du résultat de la fonction de probabilité conditionnelle associée et des observations météorologiques courantes et/ou des prévisions météorologiques courantes, mais également à partir des différences entre la date d'acquisition et les dates auxquelles ont été réalisées les observations météorologiques courantes et/ou les prévisions météorologiques courantes, de sorte à obtenir des mailles sélectionnées. Ensuite, le deuxième processeur 123 calcule le plan mission du satellite à partir des mailles sélectionnées.

Dans cette mise en œuvre, on peut écarter de l'acquisition satellitaire les mailles candidates pour lesquelles il est peu probable d'obtenir des prises de vues acceptables. Par exemple, les mailles sélectionnées sont celles dont la fonction de probabilité conditionnelle sort, pour la date d'acquisition, une probabilité supérieure ou inférieure à une première probabilité prédéterminée.

Toutefois, d'autres critères peuvent en outre être utilisés pour réaliser la sélection. Par exemple, on peut utiliser une information de priorité de la requête en imagerie satellitaire ou une information de surface des mailles candidates.

Dans un mode particulier de réalisation de l'invention, des instructions de programmes d'ordinateur mettent en œuvre les différentes opérations réalisées par les premier et deuxième processeurs 113, 123. Par conséquent, l'invention vise aussi un programme avec un code de programme d'ordinateur fixé sur un support de stockage non transitoire, et qui est susceptible d'exécuter les différentes opérations réalisées par les premier et deuxième processeurs 113, 123 lorsque le programme d'ordinateur est chargé dans l'ordinateur ou exécuté dans l'ordinateur.

## Revendications

1. Système informatique (100) pour l'acquisition d'images satellitaires associées à au moins une zone prédéterminée de la Terre (10) préalablement divisée selon une grille à mailles (20), le système comprenant :
- au moins un satellite d'observation de la Terre (110) comprenant :
un système d'imagerie optique (111) pour acquérir au moins une image satellitaire à au moins une date d'acquisition,
un premier émetteur-récepteur satellite (112) pour recevoir un signal de commande, et
un premier processeur (113) pour commander le système d'imagerie optique à partir du signal de commande,
- au moins un dispositif de calcul de plan mission pour satellite (120) comprenant :
un deuxième émetteur-récepteur satellite (121) pour émettre le signal de commande, une mémoire (122) pour stocker, pour chaque maille, un historique de valeurs de variables météorologiques qui comprend des observations météorologiques et/ou des prévisions météorologiques qui ont été observées et/ou qui ont été prévues à une date qui précède la date d'acquisition,
un deuxième processeur (123) pour :
o déterminer, pour chaque maille, à partir de l'historique de valeurs de variables météorologiques, une pluralité de groupes de valeurs qui comprennent chacun, au moins :
une première valeur de variable météorologique associée à une première date d'historique,
une deuxième valeur de variable météorologique associée à une deuxième date d'historique postérieure ou antérieure à la première date d'historique, et
une différence de temps d'historique entre la première date d'historique et la deuxième date d'historique,
o calculer, pour tout ou partie de la zone prédéterminée de la Terre, à partir de la pluralité de groupes de valeurs, une fonction de probabilité conditionnelle qui décrit la probabilité d'observer une deuxième valeur de variable météorologique comprise dans un intervalle prédéterminé à une deuxième date sous la condition :
d'observer une première valeur de variable météorologique à une première date qui est antérieure à la deuxième date, et/ou
de prévoir à la première date une troisième valeur de variable météorologique pour une date de prévision située autour de la deuxième date, à savoir, à une date qui précède, suit et/ou est égale à la deuxième date,
et sous la condition supplémentaire d'observer une différence de temps prédéterminée entre la première date, et la deuxième date et/ou la date de prévision,
o sélectionner une pluralité de mailles de la grille, prévues pour être survolées par le satellite à la date d'acquisition, à partir des caractéristiques orbitales du satellite, de sorte à obtenir des mailles candidates,
o obtenir, pour chaque maille candidate, au moins une observation météorologique courante associée à une date de planification qui précède la date d'acquisition et/ou au moins une prévision météorologique courante associée à une date située autour de la date d'acquisition,
o sélectionner tout ou partie des mailles candidates à partir de la fonction de probabilité conditionnelle et de l'au moins une observation météorologique courante et/ou de l'au moins une prévision météorologique courante, mais également à partir de la différence entre la date d'acquisition et une date de réalisation de l'au moins une
observation météorologique courante et/ou de l'au moins une prévision météorologique courante, de sorte à obtenir des mailles sélectionnées,
o calculer un plan mission du satellite à partir des mailles sélectionnées, et
o insérer le plan mission dans le signal de commande.

2. Système informatique selon la revendication 1, dans lequel la pluralité de groupes de valeurs comprend, en outre, des valeurs de variables météorologiques qui sont associées à des mailles voisines de la maille courante.

3. Système informatique selon l'une des revendications 1 à 2, dans lequel les mailles sélectionnées sont celles dont la fonction de probabilité conditionnelle sort, pour la date d'acquisition, une probabilité supérieure ou inférieure à une première probabilité prédéterminée.

4. Système informatique selon l'une des revendications 1 à 3, dans lequel le deuxième processeur calcule la fonction de probabilité conditionnelle à partir de l'estimation d'une densité de probabilité de tout ou partie des groupes de valeurs.

5. Système informatique selon l'une des revendications 1 à 3, dans lequel le deuxième processeur calcule la fonction de probabilité conditionnelle grâce à un modèle d'apprentissage automatique préentraîné à partir de tout ou partie des groupes de valeurs.

6. Dispositif de calcul de plan mission pour satellite (120), le dispositif comprenant :
- un premier émetteur-récepteur satellite (121) pour émettre un signal de commande qui commande un système d'imagerie optique d'un satellite d'observation de la Terre pour réaliser l'acquisition d'au moins une image satellitaire à au moins une date d'acquisition,
- une mémoire (122) pour stocker un historique de valeurs de variables météorologiques qui comprend des observations météorologiques associées à au moins une zone prédéterminée de la Terre préalablement divisée (110) selon une grille à mailles (11), les observations météorologiques et/ou des prévisions météorologiques qui ont été observées et/ou qui ont été prévues à une date qui précède la date d'acquisition,
- un deuxième processeur (123) pour
o déterminer, pour chaque maille, à partir de l'historique de valeurs de variables météorologiques, une pluralité de groupes de valeurs qui comprennent chacun, au moins :
une première valeur de variable météorologique associée à une première date d'historique,
une deuxième valeur de variable météorologique associée à une deuxième date d'historique postérieure ou antérieure à la première date d'historique, et
une différence de temps d'historique entre la première date d'historique et la deuxième date d'historique,
o calculer, pour tout ou partie de la zone prédéterminée de la Terre, à partir de la pluralité de groupes de valeurs, une fonction de probabilité conditionnelle qui décrit la probabilité d'observer une deuxième valeur de variable météorologique comprise dans un intervalle prédéterminé à une deuxième date sous la condition :
d'observer une première valeur de variable météorologique à une première date qui est antérieure à la deuxième date, et/ou
de prévoir à la première date une troisième valeur de variable météorologique pour une date de prévision située autour de la deuxième date, à savoir, à une date qui précède, suit et/ou est égale à la deuxième date,
et sous la condition supplémentaire d'observer une différence de temps prédéterminée entre la première date, et la deuxième date et/ou la date de prévision, o sélectionner une pluralité de mailles de la grille, prévues pour être survolées par le satellite à la date d'acquisition, à partir des caractéristiques orbitales du satellite, de sorte à obtenir des mailles candidates,
o obtenir, pour chaque maille candidate, au moins une observation météorologique courante associée à une date de planification qui précède la date d'acquisition et/ou au moins une prévision météorologique courante associée à une date située autour de la date d'acquisition,
o sélectionner tout ou partie des mailles candidates à partir de la fonction de probabilité conditionnelle et de l'au moins une observation météorologique courante et/ou de l'au moins une prévision météorologique courante, mais également à partir de la différence entre la date d'acquisition et une date de réalisation de l'au moins une observation météorologique courante et/ou de l'au moins une prévision météorologique courante, de sorte à obtenir des mailles sélectionnées,
o calculer un plan mission du satellite à partir des mailles sélectionnées, et
o insérer le plan mission dans le signal de commande.

7. Dispositif selon la revendication 6, dans lequel la pluralité de groupes de valeurs comprend, en outre, des valeurs de variables météorologiques qui sont associées à des mailles voisines de la maille courante.

8. Dispositif selon l'une des revendications 6 à 7, dans lequel les mailles sélectionnées sont celles dont la fonction de probabilité conditionnelle sort, pour la date d'acquisition, une probabilité supérieure ou inférieure à une première probabilité prédéterminée.

9. Dispositif selon l'une des revendications 6 à 8, dans lequel le deuxième processeur calcule la fonction de probabilité conditionnelle à partir de l'estimation d'une densité de probabilité de tout ou partie des groupes de valeurs.

10. Dispositif selon l'une des revendications 6 à 8, dans lequel le deuxième processeur calcule la fonction de probabilité conditionnelle grâce à un modèle d'apprentissage automatique préentraîné à partir de tout ou partie des groupes de valeurs.

## Patentansprüche

1. Rechnersystem (100) zur Aufnahme von Satellitenbildern, die mit mindestens einer vorab in ein Maschengitter (20) unterteilten vorgegebenen Zone der Erde (10) assoziiert sind, wobei das System aufweist:
- mindestens einen die Erde beobachtenden Satelliten (110), der aufweist:
ein optisches Abbildungssystem (111) zum Aufnehmen mindestens eines Satellitenbilds an mindestens einem Aufnahmedatum,
einen ersten Satelliten-Sender-Empfänger (112) zum Empfangen eines Befehlssignals, und
einen ersten Prozessor (113) zum Steuern des optischen Abbildungssystems ausgehend von dem Befehlssignal,
- mindestens eine Satellitenmissionsplan-Berechnungsvorrichtung (120), die aufweist:
einen zweiten Satelliten-Sender-Empfänger (121) zum Senden des Befehlssignals,
einen Speicher (122), um für jede Masche eine Historie von Werten von meteorologischen Variablen zu speichern, die meteorologische Beobachtungen und/oder meteorologische Vorhersagen, die an einem Datum, das dem Aufnahmedatum vorausgeht, beobachtet und/oder vorhergesagt worden sind, aufweist,
einen zweiten Prozessor (123), um:
o für jede Masche, ausgehend von der Historie der Werte der meteorologischen Variablen mehrere Wertegruppen zu bestimmen, die jeweils mindestens aufweisen:
einen ersten Wert einer meteorologischen Variablen, der mit einem ersten Historie-Datum assoziiert ist,
einen zweiten Wert einer meteorologischen Variablen, der mit einem zweiten Historie-Datum, das später oder früher als das erste Historie-Datum ist, assoziiert ist, und
eine Historie-Zeitdifferenz zwischen dem ersten Historie-Datum und dem zweiten Historie-Datum,
o für die gesamte oder einen Teil der vorgegebenen Zone der Erde, ausgehend von den mehreren Wertegruppen eine bedingte Wahrscheinlichkeitsfunktion zu berechnen, die die Wahrscheinlichkeit beschreibt, einen zweiten Wert der meteorologischen Variablen, der in einem vorgegebenen Intervall liegt, an einem zweiten Datum zu beobachten unter der Bedingung:
einen ersten Wert der meteorologischen Variablen an einem ersten Datum, das früher als das zweite Datum ist, zu beobachten, und/oder
an dem ersten Datum einen dritten Wert der meteorologischen Variablen vorherzusagen für ein Vorhersagedatum, das um das zweite Datum herum liegt, nämlich ein Datum, das dem zweiten Datum vorausgeht, folgt und/oder gleich dem zweiten Datum ist,
und unter der zusätzlichen Bedingung, eine vorgegebene Zeitdifferenz zwischen dem ersten Datum und dem zweiten Datum und/oder dem Vorhersagedatum einzuhalten,
o ausgehend von Bahnumlaufeigenschaften des Satelliten mehrere Maschen des Gitters, die voraussichtlich von dem Satelliten am Aufnahmedatum überflogen werden, auszuwählen, um Kandidaten-Maschen zu bekommen,
o für jede Kandidaten-Masche mindestens eine aktuelle meteorologische Beobachtung, die mit einem dem Aufnahmedatum vorausgehenden Planungsdatum assoziiert ist, und/oder mindestens eine aktuelle meteorologische Vorhersage, die mit einem um das Aufnahmedatum herum liegenden Datum assoziiert ist, zu bekommen,
o ausgehend von der bedingten Wahrscheinlichkeitsfunktion und der mindestens einen aktuellen meteorologischen Beobachtung und/oder der mindestens einen aktuellen meteorologischen Vorhersage, aber auch ausgehend von der Differenz zwischen dem Aufnahmedatum und einem Realisationsdatum der mindestens einen aktuellen meteorologischen Beobachtung und/oder der mindestens einen aktuellen meteorologischen Vorhersage alle oder einen Teil der Kandidaten-Maschen auszuwählen, um ausgewählte Maschen zu bekommen,
o ausgehend von den ausgewählten Maschen einen Missionsplan des Satelliten zu berechnen, und
o den Missionsplan in das Befehlssignal einzufügen.

2. Rechnersystem nach Anspruch 1, in welchem die mehreren Wertegruppen desweiteren Werte von meteorologischen Variablen aufweisen, die mit Maschen, die der aktuellen Masche benachbart sind, assoziiert sind.

3. Rechnersystem nach einem der Ansprüche 1 bis 2, in welchem die ausgewählten Maschen diejenigen sind, für die die bedingte Wahrscheinlichkeitsfunktion für das Aufnahmedatum eine höhere oder geringere Wahrscheinlichkeit als eine vorgegebene erste Wahrscheinlichkeit liefert.

4. Rechnersystem nach einem der Ansprüche 1 bis 3, in welchem der zweite Prozessor die bedingte Wahrscheinlichkeitsfunktion ausgehend von der Schätzung einer Wahrscheinlichkeitsdichte aller oder eines Teils der Wertegruppen berechnet.

5. Rechnersystem nach einem der Ansprüche 1 bis 3, in welchem der zweite Prozessor die bedingte Wahrscheinlichkeitsfunktion mit Hilfe eines ausgehend von allen oder einem Teil der Wertegruppen vorab trainierten automatischen Lernmodells berechnet.

6. Vorrichtung (120) zur Berechnung eines Missionsplans für einen Satelliten, wobei die Vorrichtung aufweist:
- einen ersten Satelliten-Sender-Empfänger (121) zum Senden eines Befehlssignals, das ein optisches Abbildungssystem eines Erdbeobachtungssatelliten steuert, um die Aufnahme mindestens eines Satellitenbilds an mindestens einem Aufnahmedatum zu realisieren,
- einen Speicher (122), um eine Historie von Werten von meteorologischen Variablen zu speichern, die aufweist
meteorologische Beobachtungen, die mit mindestens einer vorab in ein Maschengitter (11) unterteilten vorgegebenen Zone der Erde assoziiert sind,
die meteorologische Beobachtungen und/oder meteorologische Vorhersagen, die an einem Datum, das dem Aufnahmedatum vorausgeht, beobachtet und/oder vorhergesagt worden sind,
- einen zweiten Prozessor (123), um:
o für jede Masche, ausgehend von der Historie der Werte der meteorologischen Variablen mehrere Wertegruppen zu bestimmen, die jeweils mindestens aufweisen:
einen ersten Wert einer meteorologischen Variablen, der mit einem ersten Historie-Datum assoziiert ist,
einen zweiten Wert einer meteorologischen Variablen, der mit einem zweiten Historie-Datum, das später oder früher als das erste Historie-Datum ist, assoziiert ist, und
eine Historie-Zeitdifferenz zwischen dem ersten Historie-Datum und dem zweiten Historie-Datum,
o für die gesamte oder einen Teil der vorgegebenen Zone der Erde, ausgehend von den mehreren Wertegruppen eine bedingte Wahrscheinlichkeitsfunktion zu berechnen, die die Wahrscheinlichkeit beschreibt, einen zweiten Wert der meteorologischen Variablen, der in einem vorgegebenen Intervall liegt, an einem zweiten Datum zu beobachten unter der Bedingung:
einen ersten Wert der meteorologischen Variablen an einem ersten Datum, das früher als das zweite Datum ist, zu beobachten, und/oder
an dem ersten Datum einen dritten Wert der meteorologischen Variablen vorherzusagen für ein Vorhersagedatum, das um das zweite Datum herum liegt, nämlich ein Datum, das dem zweiten Datum vorausgeht, folgt und/oder gleich dem zweiten Datum ist,
und unter der zusätzlichen Bedingung, eine vorgegebene Zeitdifferenz zwischen dem ersten Datum und dem zweiten Datum und/oder dem Vorhersagedatum einzuhalten,
o ausgehend von Bahnumlaufeigenschaften des Satelliten mehrere Maschen des Gitters, die voraussichtlich von dem Satelliten am Aufnahmedatum überflogen werden, auszuwählen, um Kandidaten-Maschen zu bekommen,
o für jede Kandidaten-Masche mindestens eine aktuelle meteorologische Beobachtung, die mit einem dem Aufnahmedatum vorausgehenden Planungsdatum assoziiert ist, und/oder mindestens eine aktuelle meteorologische Vorhersage, die mit einem um das Aufnahmedatum herum liegenden Datum assoziiert ist, zu bekommen,
o ausgehend von der bedingten Wahrscheinlichkeitsfunktion und der mindestens einen aktuellen meteorologischen Beobachtung und/oder der mindestens einen aktuellen meteorologischen Vorhersage, aber auch ausgehend von der Differenz zwischen dem Aufnahmedatum und einem Realisationsdatum der mindestens einen aktuellen meteorologischen Beobachtung und/oder der mindestens einen aktuellen meteorologischen Vorhersage alle oder einen Teil der Kandidaten-Maschen auszuwählen, um ausgewählte Maschen zu bekommen,
o ausgehend von den ausgewählten Maschen einen Missionsplan des Satelliten zu berechnen, und
o den Missionsplan in das Befehlssignal einzufügen.

7. Vorrichtung nach Anspruch 6, in welcher die mehreren Wertegruppen desweiteren Werte von meteorologischen Variablen aufweisen, die mit Maschen, die der aktuellen Masche benachbart sind, assoziiert sind.

8. Vorrichtung nach einem der Ansprüche 6 bis 7, in welcher die ausgewählten Maschen diejenigen sind, für die bedingte Wahrscheinlichkeitsfunktion für das Aufnahmedatum eine höhere oder geringere Wahrscheinlichkeit als eine vorgegebene erste Wahrscheinlichkeit liefert.

9. Vorrichtung nach einem der Ansprüche 6 bis 8, in welcher der zweite Prozessor die bedingte Wahrscheinlichkeitsfunktion ausgehend von der Schätzung einer Wahrscheinlichkeitsdichte aller oder eines Teils der Wertegruppen berechnet.

10. Vorrichtung nach einem der Ansprüche 6 bis 8, in welcher der zweite Prozessor die bedingte Wahrscheinlichkeitsfunktion mit Hilfe eines ausgehend von allen oder einem Teil der Wertegruppen vorab trainierten automatischen Lernmodells berechnet.

## Claims

1. A computer system (100) for acquisition of satellite images associated with at least one predetermined zone of the Earth (10) previously divided according to a grid of cells (20), comprising:
- at least one Earth observation satellite (110) comprising:
an optical imaging system (111) for acquiring at least one satellite image on at least one acquisition date;
a first satellite transmitter-receiver (112) for receiving a command signal; and
a first processor (113) for commanding the optical imaging system based on the command signal;
- at least one mission plan calculation device for satellite (120) comprising:
a second satellite transmitter-receiver (121) for transmitting the command signal; and
a memory (122) for storing, for each cell, a history of meteorological variable values which comprises meteorological observations and/or meteorological forecasts which were observed and/or which were forecast on a certain date preceding the acquisition date;
a second processor (123) for:
o determining, for each cell, based on the history of meteorological variable values, a plurality of groups of values which each comprise, at least:
a first meteorological variable value associated with a first history date;
a second meteorological variable value associated with a second history date later or earlier than the first history date, and
a history time difference between the first history date and the second history date;
o calculating, for all or part of the predetermined zone of the Earth, based on the plurality of groups of values, a conditional probability function which describes the probability of observing a second meteorological variable value included in a predetermined interval on a second date subject to the condition of:
observing a first meteorological variable value at a first date which is prior to the second date, and/or
predicting on a first date a third meteorological variable value for a forecast date located around the second date, specifically, on a date which precedes, follows and/or is equal to the second date,
and under the additional condition of observing a predetermined time difference between the first date and the second and/or forecast date,
∘ selecting a plurality of cells from the grid, intended to be overflown by the satellite on the acquisition date, based on the orbital characteristics of the satellite, thereby obtaining candidate cells,
∘ obtaining, for each candidate cell, at least one current meteorological observation associated with a planning date which precedes the acquisition date and/or at least one current meteorological forecast associated with a date located around the acquisition date,
∘ selecting all or part of the candidate cells based on the conditional probability function and based on the at least one current meteorological observation and/or based on the at least one current meteorological forecast, and also based on the difference between the acquisition date and a date on which the at least one current meteorological observation and/or the at least one current meteorological forecast was performed,
thereby obtaining selected cells,
∘ calculating a mission plan for the satellite based on the selected cells, and
∘ inserting the mission plan into the command signal.

2. The computer system according to claim 1, wherein the plurality of groups of values further comprises meteorological variable values which are associated with cells neighboring the current cell.

3. The computer system according to one of claims 1 to 2, wherein the selected cells are the ones for which the conditional probability function gives, for the acquisition date, a probability greater than or less than a first predetermined probability.

4. The computer system according to one of claims 1 to 3 wherein the second processor calculates the conditional probability function based on the estimate of a probability density for all or part of the groups of values.

5. The computer system according to one of claims 1 to 3 wherein the second processor calculates the conditional probability function based on an automatic learning model pre-trained from all or part of the groups of values.

6. A mission plan calculation device for satellite (120) comprising:
- a first satellite transmitter-receiver (121) for transmitting a command signal which commands an optical imaging system of the Earth observation satellite for acquiring at least one satellite image on at least one acquisition date,
- memory (122) for storing a history of meteorological variable values which comprise meteorological observations associated with at least one predetermined zone of the earth (110) previously divided according to a grid of cells (11), where the meteorological observations and/or meteorological forecasts which were observed and/or which were forecast on the date preceding the acquisition date;
- a second processor (123) for:
o determining, for each cell, based on the history of meteorological variable values, a plurality of groups of values which each comprise, at least:
a first meteorological variable value associated with a first history date;
a second meteorological variable value associated with a second history date later or earlier than the first history date, and
a history time difference between the first history date and the second history date;
o calculating, for all or part of the predetermined zone of the Earth, based on the plurality of groups of values, a conditional probability function which describes the probability of observing a second meteorological variable value included in a predetermined interval on a second date subject to the condition of:
observing a first meteorological variable value at a first date which is prior to the second date, and/or
predicting on a first date a third meteorological variable value for a forecast date located around the second date, specifically, on a date which precedes, follows and/or is equal to the second date,
and under the additional condition of observing a predetermined time difference between the first date and the second and/or forecast date,
∘ selecting a plurality of cells from the grid, intended to be overflown by the satellite on the acquisition date, based on the orbital characteristics of the satellite, thereby obtaining candidate cells,
∘ obtaining, for each candidate cell, at least one current meteorological observation associated with a planning date which precedes the acquisition date and/or at least one current meteorological forecast associated with a date located around the acquisition date,
∘ selecting all or part of the candidate cells based on the conditional probability function and based on the at least one current meteorological observation and/or based on the at least one current meteorological forecast, and also based on the difference between the acquisition date and a date on which the at least one current meteorological observation and/or the at least one current meteorological forecast was performed, thereby obtaining selected cells, and
∘ calculating a mission plan for the satellite based on the selected cells, and
∘ inserting the mission plan into the command signal.

7. The device according to claim 6, wherein the plurality of groups of values further comprises of meteorological variable values which are associated with cells neighboring the current cell.

8. The device according to one of claims 6 to 7, wherein the selected cells are the ones for which the conditional probability function gives, for the acquisition date, a probability greater than or less than a first predetermined probability.

9. The device according to one of claims 6 to 8 wherein the second processor calculates the conditional probability function based on the estimate of a probability density for all or part of the groups of values.

10. The device according to one of claims 6 to 8 wherein the second processor calculates the conditional probability function based on an automatic learning model pre-trained from all or part of the groups of values.
